# FASCICULE DE BREVET EUROPEEN

(11) **EP 3 888 984 B1**
(45) Date de publication et mention de la délivrance du brevet: **04.01.2023**
(21) Numéro de dépôt: 21162743.5
(22) Date de dépôt: 16.03.2021
(51) Int. Cl.: B60T 13/66, B60T 8/17, B60T 17/22

(54) **PROCÉDÉ DE FREINAGE D'UN VÉHICULE FERROVIAIRE AFIN DE FACILITER SON DÉSACCOUPLEMENT**
BREMSVERFAHREN EINES SCHIENENFAHRZEUGS, UM SEINE ENTKOPPLUNG ZU ERLEICHTERN
BRAKING METHOD FOR A RAIL VEHICLE IN ORDER TO FACILITATE ITS DECOUPLING

(30) Priorité: 18.03.2020 FR 2002658
(43) Date de publication de la demande: 06.10.2021
(73) Titulaire: SNCF Voyageurs, 93200 Saint-Denis (FR)
(72) Inventeur: GOERES, David, 72000 LE MANS (FR); PERETTI, Olivier, 72100 LE MANS (FR); DURAND, Thierry, 72650 LA CHAPELLE SAINT-AUBIN (FR)
(74) Mandataire: Argyma

(56) Documents cités:
- WO-A1-2004/054840
- WO-A1-2015/091955
- FR-A1- 3 074 469

## Description

### DOMAINE TECHNIQUE

La présente invention concerne le domaine des véhicules ferroviaires et plus particulièrement un véhicule ferroviaire comportant plusieurs rames ferroviaires accouplées ensemble pour former un attelage.

De manière connue, un véhicule ferroviaire comprend une ou plusieurs rames ferroviaires, comprenant chacune une pluralité de voitures.

A titre d'exemple, un véhicule ferroviaire peut comporter deux rames adjacentes montées en vis-à-vis comprenant chacune un dispositif d'attelage permettant d'assurer l'accouplement et le désaccouplement des deux rames. L'accouplement de deux dispositifs d'attelage permet d'assurer la liaison mécanique, pneumatique et électrique des deux rames.

Un dispositif d'attelage connu de l'art antérieur, dit « automatique », comprend un actionneur pneumatique commandé à distance, de manière à permettre le désaccouplement de deux rames. En pratique, lorsque le véhicule ferroviaire est à l'arrêt, chaque dispositif d'attelage reçoit une commande de désaccouplement qui active l'actionneur pneumatique afin que celui-ci exerce un effort de pression sur le dispositif d'attelage en vis-à-vis de manière à déconnecter les deux dispositifs d'attelage et ainsi désaccoupler les deux rames.

En pratique, un effort de traction peut subsister dans les dispositifs d'attelage lorsque le véhicule ferroviaire est à l'arrêt. Dans cette situation, l'actionneur pneumatique ne peut pas toujours appliquer un effort de pression suffisant pour entrainer le désaccouplement des rames, ce qui présente un inconvénient. Un tel effort de traction apparait notamment lorsque les rames sont écartées l'une de l'autre de manière importante, par exemple, lorsque le véhicule ferroviaire est stationné sur des voies légèrement inclinées.

De plus, après le désaccouplement, il est généralement nécessaire de déplacer une rame par rapport l'autre de manière à espacer les deux dispositifs d'attelage et éviter un accouplement intempestif. Un tel déplacement nécessite que les portes du véhicule ferroviaire soient fermées pour éviter tout risque qu'un passager ne descende de la rame alors que celle-ci est en mouvement. En outre, le désaccouplement des rames et le déplacement de l'une d'entre elles sont deux opérations qui ne peuvent être effectuées simultanément, ce qui est peu pratique et chronophage. Le désaccouplement de deux rames est ainsi lent et peut impacter la ponctualité du véhicule ferroviaire.

Une solution évidente pour remédier à ces inconvénients serait d'augmenter l'effort appliqué par l'actionneur pneumatique d'un dispositif d'attelage en le surdimensionnant. Cependant, une telle solution n'est pas satisfaisante parce qu'elle entrainerait une augmentation de la masse du dispositif d'attelage qui pourrait abaisser les performances de la rame. En outre, le remplacement des dispositifs d'attelage des rames ferroviaires en circulation entrainerait l'immobilisation d'un trop grand nombre de véhicules, ce qui n'est pas souhaitable et représenterait un coût important.

Une deuxième solution serait, suite à l'arrêt du véhicule ferroviaire sur une voie en pente, de rapprocher les rames l'une de l'autre afin de réduire l'effort de traction. Un tel déplacement indépendant de rames accouplées n'est pas possible pour tous les véhicules et présente des risques. De plus, cette solution n'est pas applicable à un véhicule ferroviaire à fonctionnement autonome.

L'invention vise ainsi à éliminer au moins certains de ces inconvénients en proposant un procédé de freinage d'un véhicule ferroviaire simple et efficace permettant le désaccouplement de deux rames en toute situation et sans remplacer les dispositifs d'attelage existants sur les rames en circulation.

On connaît différents systèmes de freinage par les demandes de brevet WO2015/091955A1, WO2004/054840A1 et FR3074469A1.

### PRESENTATION DE L'INVENTION

L'invention concerne un procédé de freinage jusqu'à l'arrêt d'un véhicule ferroviaire circulant d'arrière vers l'avant, le véhicule ferroviaire comprenant au moins une première rame et une deuxième rame en arrière de la première rame, chaque rame comprenant au moins un dispositif d'attelage, des roues et un dispositif de freinage configuré pour appliquer un effort de freinage aux roues de ladite rame, le dispositif d'attelage de la première rame étant accouplé avec le dispositif d'attelage de la deuxième rame.

Le procédé de freinage comprend :
- une étape d'application, par le dispositif de freinage de la première rame, d'un premier effort de freinage aux roues de la première rame jusqu'à l'arrêt du véhicule ferroviaire, et
- une étape d'application, par le dispositif de freinage de la deuxième rame, d'un deuxième effort de freinage aux roues de la deuxième rame jusqu'à l'arrêt du véhicule ferroviaire.

Le procédé est remarquable en ce que le premier effort de freinage est strictement supérieur au deuxième effort de freinage de manière à permettre la compression du dispositif d'attelage de la première rame et du dispositif d'attelage de la deuxième rame.

Le procédé de freinage suivant l'invention permet avantageusement de placer les dispositifs d'attelage dans des conditions particulièrement favorables à un désaccouplement ultérieur. En outre, de telles conditions sont atteintes dès l'arrêt du véhicule ferroviaire. Aussi, lors d'un futur désaccouplement, celui-ci pourra être effectuée sans nécessiter de manœuvre supplémentaire, par exemple une quelconque adaptation de la position de l'une des rames avant le désaccouplement.

L'application d'un effort de freinage plus élevé sur la rame située à l'avant du véhicule ferroviaire permet lorsque le véhicule ferroviaire est à l'arrêt de s'assurer de la compression du dispositif d'attelage de la première rame et du dispositif d'attelage de la deuxième rame, ce qui est particulièrement avantageux. En effet, une compression des dispositifs d'attelage permet de s'assurer que l'actionneur pneumatique applique un effort de pression suffisant pour désaccoupler les deux rames, sans nécessiter le remplacement des actionneurs pneumatiques actuels par des actionneurs pneumatiques dimensionnés de manière plus importante, ce qui présenterait un coût important.

En particulier, dans une telle configuration, il n'est plus nécessaire de déplacer après le désaccouplement l'une des rames par rapport à l'autre pour éviter un accouplement intempestif, ce qui présente de nombreux avantages. Grâce à l'invention, la manœuvrede désaccouplement est plus rapide et le conducteur n'a pas à effectuer de manœuvres supplémentaires pour séparer deux rames. Un tel procédé de freinage est en outre applicable à un véhicule autonome.

De manière préférée, le premier effort de freinage est supérieur d'au moins 5% au deuxième effort de freinage, permettant de s'assurer de la compression du dispositif d'attelage de la première rame et du dispositif d'attelage de la deuxième rame.

De préférence encore, le premier effort de freinage est supérieur d'au moins 10% au deuxième effort de freinage.

Dans une forme de réalisation préférée, le véhicule ferroviaire circulant à une vitesse de déplacement, les étapes d'application du premier effort de freinage aux roues de la première rame et d'application du deuxième effort de freinage aux roues de la deuxième rame n'étant réalisées que lorsque la vitesse de déplacement est inférieure ou égale à un seuil prédéterminé.

Un tel seuil permet avantageusement de n'appliquer un effort de freinage différent entre les deux rames que lorsque le véhicule ferroviaire a atteint une vitesse de déplacement réduite, permettant de limiter l'effort de compression entre les dispositifs d'attelage. Ainsi les contraintes mécaniques dues à la compression des dispositifs d'attelage sont limitées, ce qui permet de ne pas impacter leur durée de vie.

De préférence, le procédé comprend une étape préliminaire d'application du premier effort de freinage aux roues de la première rame et aux roues de la deuxième rame lorsque la vitesse de déplacement est supérieure à un seuil prédéterminé.

De manière préférée, le seuil prédéterminé est inférieur ou égal à 10 km/h.

Dans une forme de réalisation, le procédé comportant une étape de détermination d'un effort de freinage normalisé destiné à être appliqué par le dispositif de freinage de chaque rame, le premier effort de freinage correspond à l'effort de freinage normalisé. Aussi, seul un sous-freinage est déterminé par le dispositif de pilotage et appliqué à la deuxième rame.

De manière alternative, le procédé comportant une étape de détermination d'un effort de freinage normalisé destiné à être appliqué par le dispositif de freinage de chaque rame, le deuxième effort de freinage correspond à l'effort de freinage normalisé. Aussi, seul un sur-freinage est déterminé par le dispositif de pilotage et appliqué à la première rame.

Dans une forme de réalisation, le véhicule ferroviaire comprenant au moins une troisième rame en arrière de la deuxième rame, la deuxième rame comprenant un dispositif d'attelage avant et un dispositif d'attelage arrière, la troisième rame comprenant au moins un dispositif d'attelage, des roues et un dispositif de freinage, le dispositif d'attelage arrière de la deuxième rame étant accouplé avec le dispositif d'attelage de la troisième rame, le procédé comprend une étape d'application, par le dispositif de freinage de la troisième rame, d'un troisième effort de freinage aux roues de la troisième rame jusqu'à l'arrêt du véhicule ferroviaire. Le deuxième effort de freinage est strictement supérieur au troisième effort de freinage de manière à permettre la compression du dispositif d'attelage arrière de la deuxième rame et du dispositif d'attelage de la troisième rame. Ainsi, chaque couple de dispositifs d'attelage accouplés est soumis à un effort de compression, lorsque le véhicule ferroviaire est arrêté.

L'invention concerne également une méthode de désaccouplement d'au moins une première rame et une deuxième rame, la méthode de désaccouplement comprenant la mise en œuvre du procédé de freinage tel que décrit précédemment et une étape de désaccouplement des dispositifs d'attelage de la première rame et de la deuxième rame.

De manière préférée, l'étape de désaccouplement est mise en œuvre par actionnement des dispositifs d'attelage, de préférence, de manière pneumatique.

L'invention porte enfin sur un véhicule ferroviaire configuré pour circuler d'arrière vers l'avant, le véhicule ferroviaire comprenant au moins une première rame et une deuxième rame, chaque rame comprenant des roues, au moins un dispositif d'attelage et un dispositif de freinage configuré pour appliquer un effort de freinage aux roues de ladite rame, le dispositif d'attelage de la première rame étant accouplé avec le dispositif d'attelage de la deuxième rame, le véhicule ferroviaire comprenant un dispositif de pilotage configuré pour déterminer :
- un premier effort de freinage, destiné à être appliqué par le dispositif de freinage de la première rame, aux roues de la première rame jusqu'à l'arrêt du véhicule ferroviaire,
- un deuxième effort de freinage, destiné à être appliqué par le dispositif de freinage de la deuxième rame, aux roues de la deuxième rame jusqu'à l'arrêt du véhicule ferroviaire, le premier effort de freinage étant strictement supérieur au deuxième effort de freinage de manière à permettre la compression du dispositif d'attelage de la première rame et du dispositif d'attelage de la deuxième rame.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique d'un véhicule ferroviaire comprenant deux rames accouplées selon une forme de réalisation de l'invention lors de son déplacement de l'arrière vers l'avant ;
La figure 2 est une vue schématique rapprochée de la figure 1 ;
La figure 3 est une représentation schématique de deux efforts de freinage différents appliqués aux deux rames du véhicule ferroviaire de la figure 1 ;
La figure 4 est un diagramme représentant l'évolution de la vitesse de la première rame et de la deuxième rame dans le temps suivant les efforts de freinage appliqués à chacune des rames ;
La figure 5 est une représentation schématique d'un véhicule ferroviaire comprenant trois rames sur lesquelles sont appliquées trois efforts de freinage différents et
La figure 6 est une représentation schématique des étapes d'un procédé de freinage selon un mode de mise en œuvre de l'invention.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

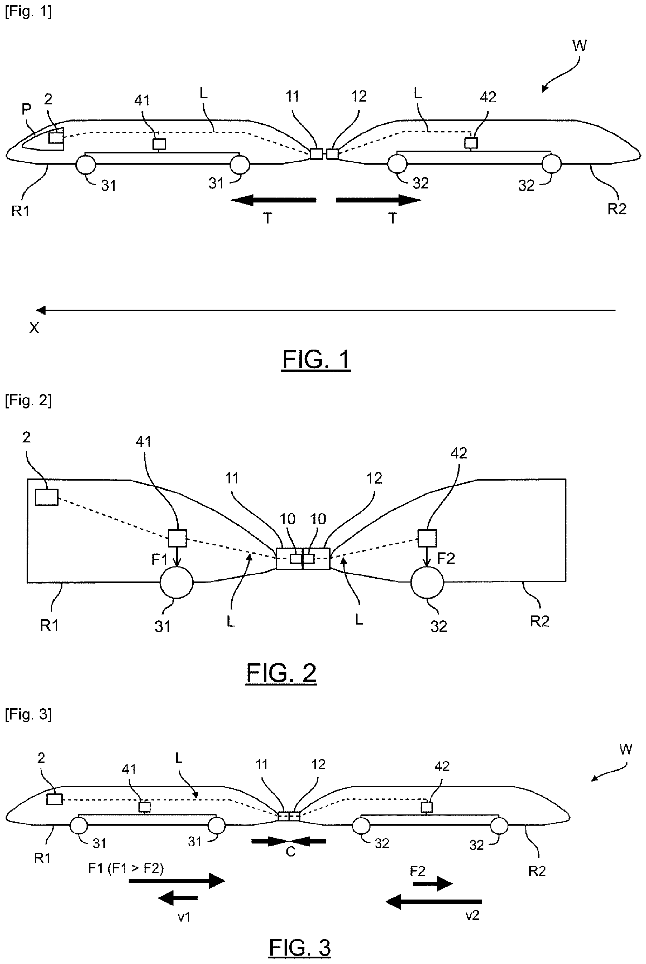

De manière connue, comme représenté sur la figure 1, un véhicule ferroviaire W comprend plusieurs rames R1, R2 ferroviaires, comportant chacune une pluralité de voitures ou wagons (non représentés). Une voiture peut être une voiture de transport de voyageurs ou une motrice par exemple.

Dans cet exemple, le véhicule ferroviaire W s'étend longitudinalement selon un axe X, représentant le sens de circulation du véhicule ferroviaire W. Autrement dit, l'axe X s'étend depuis l'arrière vers l'avant du véhicule ferroviaire W.

Chaque rame R1, R2 comporte au moins un dispositif d'attelage 11, 12 à une extrémité longitudinale. Deux rames R1, R2 adjacentes sont reliées par l'assemblage de deux dispositifs d'attelage 11, 12. Dans cet exemple, la première rame R1 comporte à son extrémité arrière un dispositif d'attelage 11 tandis que la deuxième rame R2 comporte à son extrémité avant un dispositif d'attelage 12.

Par la suite, par souci de simplicité, l'invention est présentée pour un véhicule ferroviaire W comprenant deux rames R1, R2, cependant il va de soi que le véhicule ferroviaire W peut comprendre un nombre différent de rames R, par exemple trois rames R successives, reliées deux à deux par des dispositifs d'attelage 11, 12.

Dans cet exemple, toujours en référence à la figure 1, le véhicule ferroviaire W comprend une première rame R1, située à l'avant, une deuxième rame R2, en arrière de la première rame R1, et un dispositif de pilotage 2 des deux rames R1, R2, commandé par exemple par un conducteur du véhicule ferroviaire W.

Comme illustré à la figure 1, chaque rame R1, R2 comporte des roues 31, 32 destinées à être en contact avec des rails ferroviaires et un dispositif de freinage 41, 42 configuré pour appliquer un effort de freinage sur les roues 31, 32.

Dans cet exemple, la première rame R1 comporte le dispositif de pilotage 2 qui est monté dans un poste de pilotage P. Dans cet exemple, la première rame R1 comporte un poste de pilotage P pour accueillir un conducteur mais il va de soi que celui-ci est facultatif, en particulier, lorsque le véhicule ferroviaire W est autonome. Le dispositif de pilotage 2 est relié notamment aux dispositifs de freinage 41, 42 de chacune des rames R1, R2, en particulier par des liaisons électriques L de manière à leur transmettre des efforts de freinage.

Comme indiqué précédemment, chaque rame R1, R2 comprend un dispositif d'attelage 11, 12, relié au dispositif d'attelage 11, 12 de la rame R1, R2 adjacente, de manière à solidariser les deux rames R1, R2. On parle alors de deux rames R1, R2 accouplées. La liaison entre les deux dispositifs d'attelage 11, 12 permet d'assurer une liaison mécanique, pneumatique et électrique entre les deux rames R1, R2.

Comme cela est connu, deux rames R1, R2 accouplées subissent un effort dit « de traction/compression » T/C lorsque le véhicule ferroviaire West en mouvement. Par exemple, lorsque le véhicule ferroviaire W se déplace vers l'avant, la première rame R1 avant est mise en mouvement et tracte la deuxième rame R2 arrière. Cette manœuvre génère une tension dans les dispositifs d'attelage 11, 12 entre les rames R1, R2. Autrement dit, les deux rames R1, R2 sont soumises, au niveau de leur dispositif d'attelage 11, 12, à un effort de traction T, comme cela est représenté sur la figure 1.

Chaque dispositif d'attelage 11, 12 comprend un actionneur pneumatique 10 (représenté sur la figure 2), configuré pour appliquer, lorsque le véhicule ferroviaire W est stationné, une pression sur le dispositif d'attelage 11, 12 auquel il est relié, afin de désolidariser les deux rames R1, R2. On parle alors de désaccouplement des rames R1, R2. Comme indiqué précédemment, un tel dispositif d'attelage 11, 12 est connu de l'art antérieur et n'est pas modifié dans la présente invention.

Comme décrit précédemment et représenté sur les figures 1 et 2, chaque rame R1, R2 comprend en outre un dispositif de freinage 41, 42, de préférence électrique, configuré pour recevoir, via un réseau électrique L, une commande de freinage. Une telle commande de freinage comprend un effort de freinage F1, F2 à appliquer à la rame R1, R2, plus précisément aux roues 31, 32 de la rame R1, R2 de manière à la ralentir. La commande de freinage est envoyée dans cet exemple par le dispositif de pilotage 2.

En référence à la figure 2, le dispositif de pilotage 2, monté dans cet exemple dans la première rame R1 avant, est relié électriquement au dispositif de freinage 41 de la première rame R1 et au dispositif de freinage 42 de la deuxième rame R2.

Le dispositif de pilotage 2 selon l'invention est configuré pour déterminer un premier effort de freinage F1 à appliquer à la première rame R1 et un deuxième effort de freinage F2 à appliquer à la deuxième rame R2, le premier effort de freinage F1 étant strictement supérieur au deuxième effort de freinage F2.

Le dispositif de pilotage 2 est en outre configuré pour envoyer une commande de freinage comprenant le premier effort de freinage F1 et une commande de freinage comprenant le deuxième effort de freinage F2 respectivement au dispositif de freinage 41 de la première rame R1 et au dispositif de freinage 42 de la deuxième rame R2, de manière à commander les roues 31, 32 de chaque rame R1, R2 et à appliquer un effort de freinage F1 plus important à la première rame R1.

Selon l'invention, un freinage plus important appliqué à la rame R1 située à l'avant du véhicule ferroviaire W permet avantageusement de générer un effort de compression entre les dispositifs d'attelage 11, 12 des deux rames R1, R2, lors du freinage du véhicule ferroviaire W jusqu'à l'arrêt, notamment, lorsque le véhicule ferroviaire W est arrêté de manière finale. Un tel effort de compression est particulièrement favorable pour garantir un désaccouplement optimal des deux rames R1, R2. De plus, il n'est plus nécessaire dans une telle configuration de procéder à un mouvement de l'une des rames R1, R2 par rapport à l'autre pour éviter un accouplement intempestif, ce qui présente avantageusement un gain de temps important au cours d'une manœuvre de désaccouplement.

Plus précisément, dans un exemple de réalisation, le dispositif de pilotage 2 est configuré pour déterminer un effort de freinage normalisé Fn, par exemple à partir d'une consigne de freinage demandée par le conducteur du véhicule ferroviaire W. Le dispositif de pilotage 2 est alors configuré pour déterminer à partir de l'effort de freinage normalisé Fn, le premier effort de freinage F1 et le deuxième effort de freinage F2, strictement inférieur au premier effort de freinage F1.

Dans une première forme de réalisation, le dispositif de pilotage 2 est configuré pour envoyer au dispositif de freinage 41 de la première rame R1, le premier effort de freinage F1 correspondant à l'effort de freinage normalisé Fn et pour envoyer au dispositif de freinage 42 de la deuxième rame R2, le deuxième effort de freinage F2 correspondant à un effort de freinage inférieur à l'effort de freinage normalisé Fn. On parle d'un sous-freinage de la deuxième rame R2

Dans une deuxième forme de réalisation, le dispositif de freinage 2 est configuré pour envoyer au dispositif de freinage 42 de la deuxième rame R2, le deuxième effort de freinage F2 correspondant à l'effort de freinage normalisé Fn et pour envoyer au dispositif de freinage 41 de la première rame R1, le premier effort de freinage F1 correspondant à un effort de freinage supérieur à l'effort de freinage normalisé Fn. On parle d'un sur-freinage sur la première rame R1.

De manière préférée, le premier effort de freinage F1 est supérieur au deuxième effort de freinage F2 d'un coefficient prédéterminé compris entre 2% et 15%, de préférence encore compris entre 5% et 10%. Autrement dit, le premier effort de freinage F1 est de préférence supérieur au deuxième effort de freinage F2 d'une valeur comprise par exemple entre 10kN et 50 kN. Une telle valeur dépend du type de rame, TGV, TER, ...

Comme cela est représenté sur la figure 3, le premier effort de freinage F1 appliqué à la première rame R1 étant supérieur au deuxième effort de freinage F2 appliqué à la deuxième rame R2, la vitesse de déplacement v1 de la première rame R1 est moins élevée que la vitesse de déplacement v2 de la deuxième rame R2, entrainant une compression C des deux dispositifs d'attelage 11, 12 montés en vis-à-vis.

Dans une forme de réalisation préférée de l'invention, le dispositif de pilotage 2 est configuré pour mesurer la vitesse de déplacement v du véhicule ferroviaire W et pour appliquer un même effort de freinage, correspondant par exemple à l'effort de freinage normalisé Fn, aux deux rames R1, R2 si la vitesse de déplacement v est supérieure à un seuil S prédéterminée.

Aussi, le dispositif de pilotage 2 est configuré pour envoyer une commande de sur-freinage à la première rame R1 uniquement lorsque la vitesse de déplacement v du véhicule ferroviaire W est inférieure ou égale au seuil S prédéterminé. Autrement dit, au-dessus du seuil S, le freinage est homogène sur les deux rames R1, R2, ce qui permet un freinage optimal puis hétérogène en-dessous du seuil S de manière à permettre une compression optimale et faciliter le désaccouplement. Seule la fin du freinage est avantageusement modifiée pour éviter toute tension dans les dispositifs d'attelage 11, 12.

Le seuil S prédéterminé est de préférence compris entre 3 et 15 km/h, par exemple égal à 10 km/h.

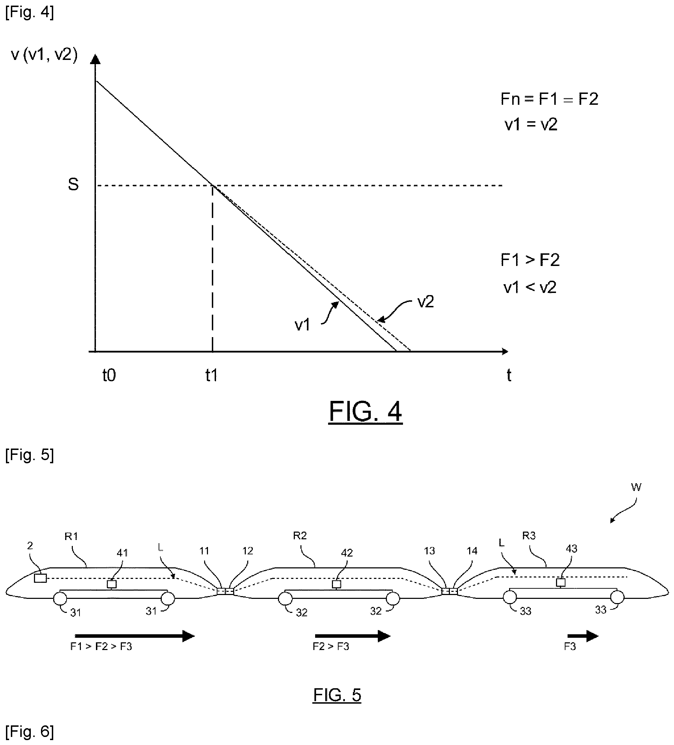

La figure 4 est un diagramme représentant l'évolution de la vitesse de déplacement v du véhicule ferroviaire W, c'est-à-dire l'évolution de la vitesse de déplacement v1 de la première rame R1 et de la vitesse de déplacement v2 de la deuxième rame R2 dans le temps t. Le diagramme indique en outre les efforts de freinage F1, F2, appliqués à la première rame R1 et à la deuxième rame R2 en fonction de la vitesse de déplacement v1, v2 des rames R1, R2.

Entre les instants t0 et t1, la vitesse de déplacement v1 est supérieure au seuil prédéterminé S, un effort de freinage identique est appliqué à la première rame R1 et à la deuxième rame R2, l'effort de freinage est dans cet exemple égal à l'effort de freinage normalisé Fn.

Lorsque la vitesse de déplacement v1 (égale à la vitesse de déplacement v2) est égale au seuil S prédéterminé, le premier effort de freinage F1 est appliqué à la première rame R1 et le deuxième effort de freinage F2, inférieur au premier effort de freinage F1, est appliqué à la deuxième rame R2. De tels efforts de freinage F1, F2 sont appliqués jusqu'à l'arrêt complet du véhicule ferroviaire W. La vitesse de déplacement v1 de la première rame R1 est alors inférieure à la vitesse de déplacement v2 de la deuxième rame R2, permettant de compresser les deux rames R1, R2.

Dans une forme alternative de réalisation, le dispositif de pilotage 2 est configuré pour appliquer un effort de freinage F1 plus important à la première rame R1 dès le début du freinage, c'est-à-dire dès que la consigne de freinage est envoyée par le conducteur.

Comme décrit précédemment, un sur-freinage de la première rame R1 (ou un sous freinage de la deuxième rame R2) permet avantageusement de compresser C le dispositif d'attelage 11 de la première rame R1 et le dispositif d'attelage 12 de la deuxième rame R2. Une telle compression C permet de placer les deux rames R1, R2 du véhicule ferroviaire W dans des conditions particulièrement favorables à un désaccouplement.

Comme précisé précédemment, ce document présente l'exemple d'un véhicule ferroviaire W comprenant deux rames R1, R2, cependant il va de soi que l'invention s'applique aussi pour un véhicule ferroviaire W comprenant un nombre différent de rames, en particulier pour trois rames R1, R2, R3.

Dans un tel cas, en référence à la figure 5, le véhicule ferroviaire W comprend une première rame R1 avant comprenant un premier dispositif d'attelage 11, une deuxième rame R2, positionnée à l'arrière de la première rame R1 et comprenant un dispositif d'attelage avant 12 et un dispositif d'attelage arrière 13, et une troisième rame R3, positionnée à l'arrière de la deuxième rame R2 et comprenant un quatrième dispositif d'attelage 14. Le premier dispositif d'attelage 11 de la première rame R1 est accouplé au dispositif d'attelage avant 12 de la deuxième rame R2. Le dispositif d'attelage arrière 13 de la deuxième rame R2 est accouplé avec le quatrième dispositif d'attelage 14 de la troisième rame R3.

Dans cette forme de réalisation, le dispositif de pilotage 2 est configuré pour déterminer, à partir de la consigne de freinage demandée par le conducteur, un premier effort de freinage F1, un deuxième effort de freinage F2 strictement inférieur au premier effort de freinage F1 et un troisième effort de freinage F3 strictement inférieur au deuxième effort de freinage F2.

Le dispositif de pilotage 2 est alors configuré pour envoyer au dispositif de freinage 41 de la première rame R1, une commande de freinage comprenant le premier effort de freinage F1, au dispositif de freinage 42 de la deuxième rame R2, une commande de freinage comprenant le deuxième effort de freinage F2, et au dispositif de freinage 43 de la troisième rame R3, une commande de freinage comprenant le troisième effort de freinage F3.

Une telle forme de réalisation permet avantageusement à la fois la compression du premier dispositif d'attelage 11 de la première rame R1 et du dispositif d'attelage avant 12 de la deuxième rame R2 et la compression du dispositif d'attelage arrière 13 de la deuxième rame R2 et du quatrième dispositif d'attelage 14 de la troisième rame R3.

Dans cet exemple, le premier effort de freinage F1 peut correspondre à l'effort de freinage normalisé Fn, auquel cas, le deuxième effort de freinage F2 correspond au premier effort de freinage F1 abaissé d'un coefficient prédéterminé, par exemple 10%, et le troisième effort de freinage F3 correspond au deuxième effort de freinage F2 abaissé d'un coefficient prédéterminé, par exemple 10%.

De manière alternative, le deuxième effort de freinage F2 peut correspondre à l'effort de freinage normalisé Fn, auquel cas, le premier effort de freinage F1 correspond au deuxième effort de freinage F2 augmenté d'un coefficient prédéterminé, par exemple 10%, et le troisième effort de freinage F3 correspond au deuxième effort de freinage F2 abaissé d'un coefficient prédéterminé, par exemple 10%.

Selon une troisième forme de réalisation, le troisième effort de freinage F3 peut correspondre à l'effort de freinage normalisé Fn, auquel cas, le deuxième effort de freinage F2 correspond au troisième effort de freinage F3 augmenté d'un coefficient prédéterminé, par exemple 10%, et le premier effort de freinage F1 correspond au deuxième effort de freinage F2 augmenté d'un coefficient prédéterminé, par exemple 10%.

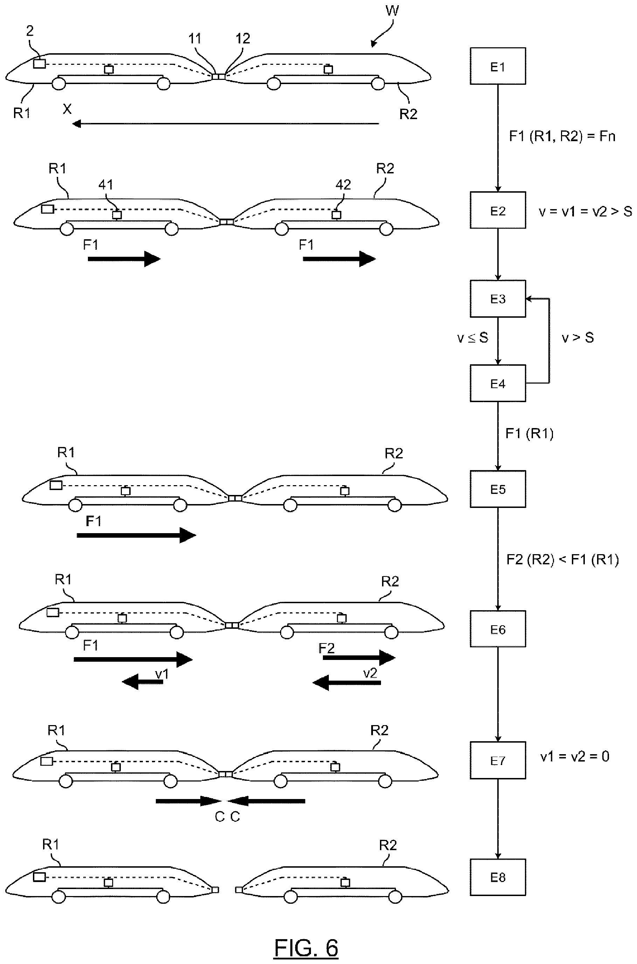

Il va dorénavant être décrit un procédé de freinage selon un mode de mise en oeuvre de l'invention, en référence à la figure 6. Le procédé de freinage selon l'invention est réalisé jusqu'à l'arrêt complet du véhicule ferroviaire W. Autrement dit, le procédé de freinage s'applique en particulier pour un arrêt du véhicule ferroviaire W en gare. Le procédé de freinage est décrit pour l'exemple d'un véhicule ferroviaire W comprenant deux rames R1, R2 accouplées. Dans cet exemple, la première rame R1 est positionnée à l'avant du véhicule ferroviaire W et la deuxième rame R2 est positionnée à l'arrière de la première rame R1. De plus, dans cet exemple, le véhicule ferroviaire W circule initialement à une vitesse de déplacement v supérieure à un seuil S prédéterminé, par exemple 10 km/h.

Le procédé comprend tout d'abord une étape de détermination E1, par le dispositif de pilotage 2, d'un effort de freinage normalisé Fn, fonction d'une consigne de freinage demandée par le conducteur du véhicule ferroviaire W par exemple.

La vitesse de déplacement v du véhicule ferroviaire W étant supérieure au seuil S prédéterminé, le dispositif de pilotage 2 envoie, dans cet exemple, dans une étape E2, une commande de freinage comprenant un premier effort de freinage F1 correspondant à l'effort de freinage normalisé Fn à la fois au dispositif de freinage 41 de la première rame R1 et au dispositif de freinage 42 de la deuxième rame R2.

Le dispositif de pilotage 2 détecte ensuite, dans une étape E3, une vitesse de déplacement v inférieure ou égale au seuil S prédéterminé. Le dispositif de pilotage 2 détermine alors, dans une étape E4, un premier effort de freinage F1 et un deuxième effort de freinage F2, strictement inférieur au premier effort de freinage F1. Le dispositif de pilotage 2 envoie, dans cette étape E4, une commande de freinage comprenant le premier effort de freinage F1 au dispositif de freinage 41 de la première rame R1 et une commande de freinage comprenant le deuxième effort de freinage F2 au dispositif de freinage 42 de la deuxième rame R2.

Le procédé de freinage comprend alors une étape d'application E5, par le dispositif de freinage 41 de la première rame R1, du premier effort de freinage F1 aux roues 31 de la première rame R1 jusqu'à l'arrêt du véhicule ferroviaire W, et une étape d'application E6, par le dispositif de freinage 42 de la deuxième rame R2, du deuxième effort de freinage F2 aux roues 32 de la deuxième rame R2 jusqu'à l'arrêt du véhicule ferroviaire W.

La vitesse de déplacement v1 de la première rame R1 devient alors inférieure à la vitesse de déplacement v2 de la deuxième rame R2 et les rames R1, R2 se rapprochent.

De manière alternative, il va de soi qu'un effort de freinage F1, F2 différent peut tout aussi bien être appliqué à la première rame R1 et à la deuxième rame R2 dès le début du freinage du véhicule ferroviaire W, c'est-à-dire dans cet exemple dès que la consigne de freinage est demandée par le conducteur.

Lorsque le véhicule ferroviaire W est à l'arrêt, les dispositifs d'attelage 11, 12 de chaque rame R1, R2 sont contraints, dans une étape E7, par un effort de compression C.

La différence de vitesse v1, v2 entre les deux rames R1, R2 lors du procédé de freinage permet de créer les conditions d'efforts mécaniques optimums dans les dispositifs d'attelage 11, 12 pour garantir par la suite un désaccouplement rapide des deux rames R1, R2.

Ce document présente l'exemple de l'application de l'effort de freinage normalisé Fn à la première rame R1 et d'un sous-freinage à la deuxième rame R2, cependant il va de soi comme décrit précédemment, qu'au cours de l'étape E4, le dispositif de pilotage 2 pourrait tout aussi bien envoyer une commande de freinage comprenant l'effort de freinage normalisé Fn à la deuxième rame R2 et une commande de freinage correspondant à un sur-freinage à la première rame R1.

Dans le cas d'un véhicule ferroviaire W comprenant une troisième rame R3, en arrière de la deuxième rame R2, le dispositif de pilotage 2 détermine en outre, au cours de l'étape E4, un troisième effort de freinage F3, strictement inférieur au deuxième effort de freinage F2. Le procédé comprend alors une étape d'application, par le dispositif de freinage 43 de la troisième rame R3, du troisième effort de freinage F3 aux roues 33 de la troisième rame R3 jusqu'à l'arrêt du véhicule ferroviaire W.

Une méthode de désaccouplement comprend alors suite aux différentes étapes du procédé de freinage, une étape de désaccouplement E8 de la première rame R1 et de la deuxième rame R2. Un tel désaccouplement, de préférence pneumatique, est aisément réalisé du fait de l'effort de compression C dans les dispositifs d'attelage 11, 12 initialement accouplés.

Grâce à l'invention, lorsque le véhicule ferroviaire est arrêté suite à la mise en œuvre du procédé de freinage, il est possible de désaccoupler les deux rames sans avoir à augmenter les capacités des actionneurs pneumatiques et sans risquer un accouplement intempestif. En outre, la méthode de désaccouplement suivant l'invention permet avantageusement de réduire la durée de la manœuvre de désaccouplement en s'affranchissant de la nécessité de déplacer l'une des deux rames par rapport à l'autre.

## Revendications

1. Procédé de freinage jusqu'à l'arrêt d'un véhicule ferroviaire (W) circulant d'arrière vers l'avant, le véhicule ferroviaire (W) comprenant au moins une première rame (R1) et une deuxième rame (R2) en arrière de la première rame (R1), chaque rame (R1, R2) comprenant au moins un dispositif d'attelage (11, 12), des roues (31, 32) et un dispositif de freinage (41, 42) configuré pour appliquer un effort de freinage (F1, F2) aux roues (31, 32) de ladite rame (R1, R2), le dispositif d'attelage (11) de la première rame (R1) étant accouplé avec le dispositif d'attelage (12) de la deuxième rame (R2), le procédé de freinage comprenant :
- une étape d'application (E5), par le dispositif de freinage (41) de la première rame (R1), d'un premier effort de freinage (F1) aux roues (31) de la première rame (R1) jusqu'à l'arrêt du véhicule ferroviaire (W), et
- une étape d'application (E6), par le dispositif de freinage (42) de la deuxième rame (R2), d'un deuxième effort de freinage (F2) aux roues (32) de la deuxième rame (R2) jusqu'à l'arrêt du véhicule ferroviaire (W),
- procédé dans lequel le premier effort de freinage (F1) est strictement supérieur au deuxième effort de freinage (F2) de manière à permettre la compression (C) du dispositif d'attelage (11) de la première rame (R1) et du dispositif d'attelage (12) de la deuxième rame (R2).

2. Procédé de freinage selon la revendication 1, dans lequel le premier effort de freinage (F1) est supérieur d'au moins 5% au deuxième effort de freinage (F2).

3. Procédé de freinage selon la revendication 2, dans lequel le premier effort de freinage (F1) est supérieur d'au moins 10% au deuxième effort de freinage (F2).

4. Procédé de freinage selon l'une des revendications 1 à 3, dans lequel, le véhicule ferroviaire (W) circulant à une vitesse de déplacement (v), les étapes d'application (E5) du premier effort de freinage (F1) aux roues (31) de la première rame (R1) et d'application (E6) du deuxième effort de freinage (F2) aux roues (32) de la deuxième rame (R2) n'étant réalisées que lorsque la vitesse de déplacement (v) est inférieure ou égale à un seuil (S) prédéterminé.

5. Procédé de freinage selon la revendication 4, dans lequel le seuil (S) prédéterminé est inférieur ou égal à 10 km/h.

6. Procédé de freinage selon l'une des revendications 1 à 5, dans lequel, le procédé comportant une étape de détermination (E1) d'un effort de freinage normalisé (Fn) destiné à être appliqué par le dispositif de freinage (41, 42) de chaque rame (R1, R2), le premier effort de freinage (F1) correspond à l'effort de freinage normalisé (Fn).

7. Procédé de freinage selon l'une des revendications 1 à 5, dans lequel, le procédé comportant une étape de détermination (E1) d'un effort de freinage normalisé (Fn) destiné à être appliqué par le dispositif de freinage (41, 42) de chaque rame (R1, R2), le deuxième effort de freinage (F2) correspond à l'effort de freinage normalisé (Fn)

8. Procédé de freinage selon l'une des revendications 1 à 7, dans lequel, le véhicule ferroviaire (W) comprenant au moins une troisième rame (R3) en arrière de la deuxième rame (R2), la deuxième rame (R2) comprenant un dispositif d'attelage avant (12) et un dispositif d'attelage arrière (13), la troisième rame (R3) comprenant au moins un dispositif d'attelage (14), des roues (33) et un dispositif de freinage (43), le dispositif d'attelage arrière (13) de la deuxième rame (R2) étant accouplé avec le dispositif d'attelage (14) de la troisième rame (R3), le procédé comprenant :
- une étape d'application, par le dispositif de freinage (43) de la troisième rame (R3), d'un troisième effort de freinage (F3) aux roues (33) de la troisième rame (R3) jusqu'à l'arrêt du véhicule ferroviaire (W),
- le deuxième effort de freinage (F2) est strictement supérieur au troisième effort de freinage (F3) de manière à permettre la compression du dispositif d'attelage arrière (13) de la deuxième rame (R2) et du dispositif d'attelage (14) de la troisième rame (R3).

9. Méthode de désaccouplement d'au moins une première rame (R1) et une deuxième rame (R2), la méthode de désaccouplement comprenant la mise en œuvre du procédé de freinage selon l'une des revendications 1 à 8 et une étape de désaccouplement (E8) des dispositifs d'attelage (11, 12) de la première rame (R1) et de la deuxième rame (R2).

10. Véhicule ferroviaire (W) configuré pour circuler d'arrière vers l'avant, le véhicule ferroviaire (W) comprenant au moins une première rame (R1) et une deuxième rame (R2), chaque rame (R1, R2) comprenant des roues (31, 32), au moins un dispositif d'attelage (11, 12) et un dispositif de freinage (41, 42) configuré pour appliquer un effort de freinage (F1, F2) aux roues (31, 32) de ladite rame (R1, R2), le dispositif d'attelage (11) de la première rame (R1) étant accouplé avec le dispositif d'attelage (12) de la deuxième rame (R2), le véhicule ferroviaire (W) comprenant un dispositif de pilotage (2) configuré pour déterminer :
- un premier effort de freinage (F1), destiné à être appliqué par le dispositif de freinage (41) de la première rame (R1), aux roues (31) de la première rame (R1) jusqu'à l'arrêt du véhicule ferroviaire (W),
- un deuxième effort de freinage (F2), destiné à être appliqué par le dispositif de freinage (42) de la deuxième rame (R2), aux roues (32) de la deuxième rame (R2) jusqu'à l'arrêt du véhicule ferroviaire (W),
- le premier effort de freinage (F1) étant strictement supérieur au deuxième effort de freinage (F2) de manière à permettre la compression du dispositif d'attelage (11) de la première rame (R1) et du dispositif d'attelage (12) de la deuxième rame (R2).

## Patentansprüche

1. Verfahren zum Bremsen bis zum Stillstand eines Schienenfahrzeugs (W), das von hinten nach vorn fährt, wobei das Schienenfahrzeug (W) mindestens einen ersten Zug (R1) und einen zweiten Zug (R2) hinter dem ersten Zug (R1) umfasst, wobei jeder Zug (R1, R2) mindestens eine Anhängevorrichtung (11, 12), Räder (31, 32) und eine Bremsvorrichtung (41, 42) umfasst, wobei die Bremsvorrichtung (41, 42) ausgelegt ist, um eine Bremskraft (F1, F2) auf die Räder (31, 32) des Zugs (R1, R2) auszuüben, wobei die Anhängevorrichtung (11) des ersten Zugs (R1) mit der Anhängevorrichtung (12) des zweiten Zugs (R2) gekoppelt ist, wobei das Bremsverfahren umfasst:
- einen Schritt des Anwendens (E5) einer ersten Bremskraft (F1) auf die Räder (31) des ersten Zugs (R1) bis zum Stillstand des Schienenfahrzeugs (W) durch die Bremsvorrichtung (41) des ersten Zugs (R1), und
- einen Schritt des Anwendens (E6) einer zweiten Bremskraft (F2) auf die Räder (32) des zweiten Zugs (R2) bis zum Stillstand des Schienenfahrzeugs (W) durch die Bremsvorrichtung (42) des zweiten Zugs (R2),
wobei bei dem Verfahren die erste Bremskraft (F1) strikt größer als die zweite Bremskraft (F2) derart ist, dass die Kompression (C) der Anhängevorrichtung (11) des ersten Zugs (R1) und der Anhängevorrichtung (12) des zweiten Zugs (R2) erlaubt wird.

2. Bremsverfahren nach Anspruch 1, wobei die erste Bremskraft (F1) um mindestens 5 % größer als die zweite Bremskraft (F2) ist.

3. Bremsverfahren nach Anspruch 2, wobei die erste Bremskraft (F1) um mindestens 10 % größer als die zweite Bremskraft (F2) ist.

4. Bremsverfahren nach einem der Ansprüche 1 bis 3, wobei, wenn das Schienenfahrzeug (W) mit einer Fahrgeschwindigkeit (v) fährt, die Schritte der Anwendung (E5) der ersten Bremskraft (F1) auf die Räder (31) des ersten Zugs (R1) und der Anwendung (E6) der zweiten Bremskraft (F2) auf die Räder (32) des zweiten Zugs (R2) nur dann durchgeführt werden, wenn die Fahrgeschwindigkeit (v) kleiner oder gleich einem vorher festgelegten Grenzwert (S) ist.

5. Bremsverfahren nach Anspruch 4, wobei der vorher festgelegte Grenzwert (S) kleiner oder gleich 10 km/h ist.

6. Bremsverfahren nach einem der Ansprüche 1 bis 5, wobei, wenn das Verfahren einen Schritt des Bestimmens (E1) einer Standard-Bremskraft (Fn) aufweist, die bestimmt ist, von der Bremsvorrichtung (41, 42) jedes Zugs (R1, R2) angewendet zu werden, die erste Bremskraft (F1) der Standard-Bremskraft (Fn) entspricht.

7. Bremsverfahren nach einem der Ansprüche 1 bis 5, wobei, wenn das Verfahren einen Schritt des Bestimmens (E1) einer Standard-Bremskraft (Fn) aufweist, die bestimmt ist, von der Bremsvorrichtung (41, 42) jedes Zugs (R1, R2) angewendet zu werden, die zweite Bremskraft (F2) der Standard-Bremskraft (Fn) entspricht.

8. Bremsverfahren nach einem der Ansprüche 1 bis 7, wobei, wenn das Schienenfahrzeug (W) mindestens einen dritten Zug (R3) hinter dem zweiten Zug (R2) umfasst, der zweite Zug (R2) eine vordere Anhängevorrichtung (12) und eine hintere Anhängevorrichtung (13) umfasst, wobei der dritte Zug (R3) mindestens eine Anhängevorrichtung (14), Räder (33) und eine Bremsvorrichtung (43) umfasst, wobei die hintere Anhängevorrichtung (13) des zweiten Zugs (R2) mit der Anhängevorrichtung (14) des dritten Zugs (R3) gekoppelt ist, das Verfahren umfasst:
- einen Schritt des Anwendens einer dritten Bremskraft (F3) auf die Räder (33) des dritten Zugs (R3) bis zum Stillstand des Schienenfahrzeugs (W) durch die Bremsvorrichtung (43) des dritten Zugs (R3),
wobei die zweite Bremskraft (F2) strikt größer als die dritte Bremskraft (F3) derart ist, dass die Kompression der hinteren Anhängevorrichtung (13) des zweiten Zugs (R2) und der Anhängevorrichtung (14) des dritten Zugs (R3) erlaubt wird.

9. Methode zum Entkoppeln mindestens eines ersten Zugs (R1) und eines zweiten Zugs (R2), wobei die Entkopplungsmethode die Durchführung des Bremsverfahrens nach einem der Ansprüche 1 bis 8 und einen Schritt des Entkoppelns (E8) der Anhängevorrichtungen (11, 12) des ersten Zugs (R1) und des zweiten Zugs (R2) umfasst.

10. Schienenfahrzeug (W), das ausgelegt ist, um von hinten nach vorn zu fahren, wobei das Schienenfahrzeug (W) mindestens einen ersten Zug (R1) und einen zweiten Zug (R2) umfasst, wobei jeder Zug (R1, R2) Räder (31, 32), mindestens eine Anhängevorrichtung (11, 12) und eine Bremsvorrichtung (41, 42) umfasst, wobei die Bremsvorrichtung (41, 42) ausgelegt ist, um eine Bremskraft (F1, F2) auf die Räder (31, 32) des Zugs (R1, R2) anzuwenden, wobei die Anhängevorrichtung (11) des ersten Zugs (R1) mit der Anhängevorrichtung (12) des zweiten Zugs (R2) gekoppelt ist, wobei das Schienenfahrzeug (W) eine Steuervorrichtung (2) umfasst, die ausgelegt ist, um zu bestimmen:
- eine erste Bremskraft (F1), die bestimmt ist, von der Bremsvorrichtung (41) des ersten Zugs (R1) auf die Räder (31) des ersten Zugs (R1) bis zum Stillstand des Schienenfahrzeugs (W) angewendet zu werden,
- eine zweite Bremskraft (F2), die bestimmt ist, von der Bremsvorrichtung (42) des zweiten Zugs (R2) auf die Räder (32) des zweiten Zugs (R2) bis zum Stillstand des Schienenfahrzeugs (W) angewendet zu werden,
wobei die erste Bremskraft (F1) strikt größer als die zweite Bremskraft (F2) derart ist, dass die Kompression der Anhängevorrichtung (11) des ersten Zugs (R1) und der Anhängevorrichtung (12) des zweiten Zugs (R2) erlaubt wird.

## Claims

1. Braking method until stopping of a railway vehicle (W) running from the rear towards the front, the railway vehicle (W) comprising at least one first train (R1) and one second train (R2) behind the first train (R1), each train (R1, R2) comprising at least one coupling device (11, 12), wheels (31, 32) and a braking device (41, 42) configured to apply a braking effort (F1, F2) to the wheels (31, 32) of said train (R1, R2), the coupling device (11) of the first train (R1) being coupled with the coupling device (12) of the second train (R2), the braking method comprising:
- an application step (E5), by the braking device (41) of the first train (R1), of a first braking effort (F1) to the wheels (31) of the first train (R1) until stopping of the railway vehicle (W), and
- a stage of application (E6), by the braking device (42) of the second train (R2), of a second braking effort (F2) to the wheels (32) of the second train (R2) until stopping of the railway vehicle (W),
- method in which the first braking effort (F1) is strictly greater than the second braking effort (F2) so as to allow compression (C) of the coupling device (11) of the first train (R1) and of the coupling device (12) of the second train (R2).

2. Braking method according to claim 1, wherein the first braking effort (F1) is at least 5% greater than the second braking effort (F2).

3. Braking method according to claim 2, wherein the first braking effort (F1) is at least 10% greater than the second braking effort (F2).

4. Braking method according to any one of claims 1 to 3, wherein, the railway vehicle (W) running at a travel speed (v), the steps of application (E5) of the first braking effort (F1) to the wheels (31) of the first train (R1) and of application (E6) of the second braking effort (F2) to the wheels (32) of the second train (R2) are only carried out when the travel speed (v) is less than or equal to a predetermined threshold (S).

5. Braking method according to claim 4, wherein the predetermined threshold (S) is less than or equal to 10 km/h.

6. Braking method according to any one of claims 1 to 5, wherein, the method comprising a step of determining (E1) a normalised braking effort (Fn) intended to be applied by the braking device (41, 42) of each train (R1, R2), the first braking effort (F1) corresponds to the normalised braking effort (Fn).

7. Braking method according to any of claims 1 to 5, wherein, the method comprising a step of determining (E1) a normalised braking effort (Fn) intended to be applied by the braking device (41, 42) of each train (R1, R2), the second braking effort (F2) corresponds to the normalised braking effort (Fn)

8. Braking method according to any one of claims 1 to 7, wherein the railway vehicle (W) comprising at least one third train (R3) behind the second train (R2), the second train (R2) comprising a front coupling device (12) and a rear coupling device (13), the third train (R3) comprising at least one coupling device (14), wheels (33) and a braking device (43), the rear coupling device (13) of the second train (R2) being coupled with the coupling device (14) of the third train (R3), the method comprising:
- an application step, by the braking device (43) of the third train (R3), of a third braking effort (F3) to the wheels (33) of the third train (R3) until stopping of the railway vehicle (W),
- the second braking effort (F2) is strictly greater than the third braking effort (F3) so as to allow compression of the rear coupling device (13) of the second train (R2) and of the coupling device (14) of the third train (R3).

9. Decoupling method of at least one first train (R1) and one second train (R2), the decoupling method comprising implementing the braking method according to any one of claims 1 to 8 and a step of decoupling (E8) the coupling devices (11, 12) of the first train (R1) and of the second train (R2).

10. Railway vehicle (W) configured to run from rear to front, the railway vehicle (W) comprising at least one first train (R1) and one second train (R2), each train (R1, R2) comprising wheels (31, 32), at least one coupling device (11, 12) and one braking device (41, 42) configured to apply a braking effort (F1, F2) to the wheels (31, 32) of said train (R1, R2), the coupling device (11) of the first train (R1) being coupled with the coupling device (12) of the second train (R2), the railway vehicle (W) comprising a steering device (2) configured to determine:
- a first braking effort (F1), intended to be applied by the braking device (41) of the first train (R1), to the wheels (31) of the first train (R1) until stopping of the railway vehicle (W),
- a second braking effort (F2), intended to be applied by the braking device (42) of the second train (R2), to the wheels (32) of the second train (R2) until stopping of the railway vehicle (W),
- the first braking effort (F1) being strictly greater than the second braking effort (F2) so as to allow compression of the coupling device (11) of the first train (R1) and of the coupling device (12) of the second train (R2).
